# EUROPÄISCHE PATENTSCHRIFT

(11) **EP 2 388 498 B1**
(45) Veröffentlichungstag und Bekanntmachung des Hinweises auf die Patenterteilung: **19.09.2012**
(21) Anmeldenummer: 10005310.7
(22) Anmeldetag: 21.05.2010
(51) Int. Cl.: F16J 15/46, F03D 11/02

(54) **Getriebe für eine Windkraftanlage**
Transmission for a wind turbine
Transmission pour une éolienne

(43) Veröffentlichungstag der Anmeldung: 23.11.2011
(73) Patentinhaber: Winergy AG, 46562 Voerde (DE)
(72) Erfinder: Dinter, Ralf Martin, 45888 Gelsenkirchen (DE)
(74) Vertreter: Michau, Sascha

(56) Entgegenhaltungen:
- EP-A2- 1 538 332
- DE-B3- 10 318 945
- US-A- 3 642 291

## Beschreibung

Entsprechend bisherigen Lösungen werden An- bzw. Abtriebswellen in Getrieben für Windkraftanlagen mittels Spalt- oder Labyrinthdichtungen berührungslos abgedichtet. Beim Transport eines Getriebes, insbesondere beim Seetransport, ist dies problematisch, da derartige Dichtungen das Getriebe nicht wirksam bei transportbedingten Bewegungen oder Beschleunigungen abdichten und Schmierstoff aus dem Getriebe austreten kann. Um dieses Problem zu lösen, werden für den Transport entsprechend herkömmlichen Lösungen statische Zusatzdichtungen montiert, die vor Inbetriebnahme entfernt werden müssen.

Aus EP 2 080 904 A1 ist ein Getriebe für eine Windkraftanlage bekannt, bei dem zur Abdichtung des Getriebes während des Transports eine konzentrisch zur Antriebs- und Abtriebswelle angeordnete Hohlwelle vorgesehen ist. Die Hohlwelle erstreckt sich axial zwischen Antriebs- und Abtriebswelle über das gesamte Getriebe und erfüllt eine Dichtungsfunktion. Hierdurch soll ein Austreten von Schmierstoff aus dem Getriebe während des Transports vermieden werden.

In DE 198 49 237 A1 ist ein Dichtungssystem für eine Antriebseinheit beschrieben, die ein Getriebe umfaßt. Um während Transport, Montage und Betrieb des Antriebssystems ein Austreten von Schmieröl zu vermeiden, sind eine Radialwellendichtung, ein Schleuderelement sowie ein Deck- und Saugelement vorgesehen. Das Deck- und Saugelement ist getriebeseitig vor der Radialwellendichtung angeordnet. Im Bereich des Schleuderelements ist ein Schmierölsammelraum vorgesehen, der über einen in Richtung des Deck- und Saugelements verlaufenden Kanal mit dem Getrieberaum verbunden ist. Der Kanal ist im saugseitigen Bereich des Deck- und Saugelements angeordnet.

Aus DE 103 18 945 B3, wolche als der nächste stand der technik angesoher wird, ist ein Planetengetriebe für eine Windenergieanlage mit einem Getriebegehäuse, einem Sonnenrad und einem im Getriebegehäuse gelagerten, rotierenden Planetenhohlrad bekannt, das fest mit dem Antriebselement der Windenergieanlage verbunden ist. An einer Planetenträgerplatte sind Planetenbolzen befestigt, auf denen Planetenräder gelagert sind. Eine vordere Getriebelagerung des Planetenhohlrades ist in einer Ebene einer Getriebeverzahnung einer ersten Getriebestufe angeordnet. Die Planetenträgerplatte ist fest mit dem Getriebegehäuse verbunden ist. Die Planetenräder sind auf den mit der Planetenträgerplatte fest verbundenen Planetenbolzen (22) taumelgelagert.

Der vorliegenden Erfindung liegt die Aufgabe zugrunde, ein Getriebe mit einer verbesserten Abdichtung zur Vermeidung eines Austritts von Getriebeschmierstoff während eines Getriebetransports zu schaffen.

Diese Aufgabe wird erfindungsgemäß durch ein Getriebe mit den in Anspruch 1 angegebenen Merkmalen gelöst. Vorteilhafte Ausgestaltungen der vorliegenden Erfindung sind in den abhängigen Ansprüchen angegeben.

Das erfindungsgemäße Getriebe umfaßt eine mit einer Rotornabe verbindbare Antriebswelle, eine mit einem Generator verbindbare Abtriebswelle und ein mit der Antriebswelle drehfest verbundenes erstes Zahnrad, das in einem Getriebegehäuse angeordnet ist. Mit der Abtriebswelle drehfest verbunden ist ein zweites Zahnrad, das im Getriebegehäuse angeordnet ist und mit dem ersten Zahnrad kämmt oder mit diesem über ein oder mehrere weitere Zahnräder gekoppelt ist. Außerdem ist zumindest ein die Antriebswelle bzw. die Abtriebswelle radial umgebender Flansch vorgesehen, der an einer der Antriebswelle bzw. Abtriebswelle zugewandten Seite eine umlaufende Nut aufweist. In der umlaufenden Nut ist ein ringförmiges, schlauchartiges Dichtungselement aus einem elastischen Material fixiert, das durch eine Innendruckerhöhung expandierbar ist. Dabei ist ein Zwischenraum zwischen der Antriebswelle oder Abtriebswelle und der umlaufenden Nut in einem expandierten Zustand vollständig durch das Dichtungselement abgedichtet. Das Dichtungselement ist ferner mit einer den Innendruck steuernden oder regelnden Transportsicherungsvorrichtung gekoppelt und kann beispielsweise die Antriebswelle bzw. Abtriebswelle in einem Zustand mit reduziertem Innendruck berührungsfrei umgeben und permanent im Getriebe verbleiben. Aufgrund dessen können bisher übliche Zusatzdich- entfallen, die nach einem Getriebetransport wieder aufwendig demontiert werden müssen. Hierdurch ergibt sich ein reduzierter Montageaufwand für Transport und Inbetriebnahme.

Die vorliegende Erfindung wird nachfolgend an einem Ausführungsbeispiel anhand der Zeichnung näher erläutert. Es zeigt
- Figur 1: eine schematische Darstellung eines Getriebes für eine Windkraftanlage,
- Figur 2: eine perspektivische Darstellung eines Gehäusedeckels mit einem Dichtungselement in einem Zustand mit reduziertem Innendruck,
- Figur 3: eine perspektivische Darstellung eines Gehäusedeckels mit einem Dichtungselement in einem expandiertem Zustand.

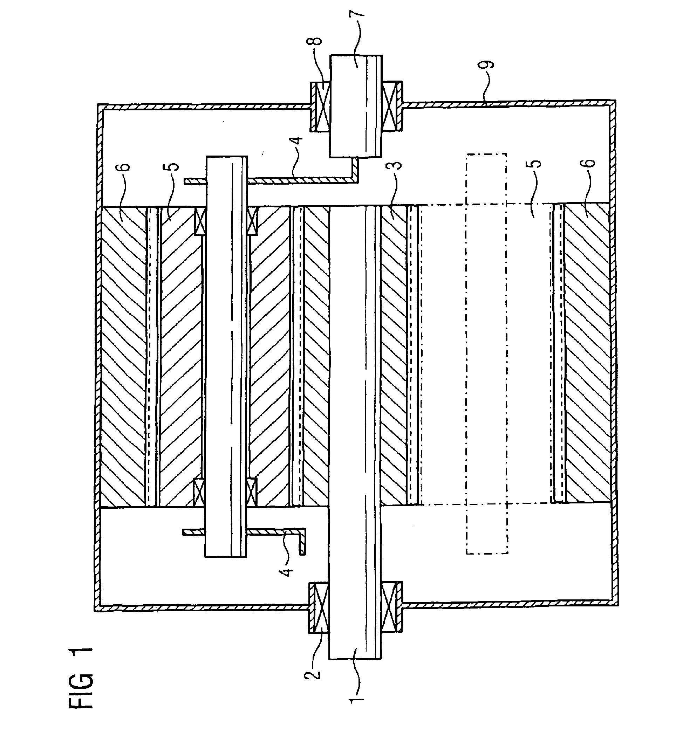

Das in Figur 1 dargestellte Getriebe für eine Windkraftanlage umfaßt ein mit einer Antriebswelle 1 verbundenes Sonnenrad 3, ein Hohlrad 6 und einem Planetenträger 4, in dem mehrere Planetenräder 5 gelagert sind und der mit einer Abtriebswelle 7 verbunden ist. Die Antriebswelle 1 ist mit einer Rotornabe verbindbar, während die Abtriebswelle 7 mit einem Generator der Windkraftanlage verbunden werden kann. Das Hohlrad 6 kann in ein- oder mehrteiliges Getriebegehäuse 9 integriert sein, das auch Lagersitze für Lager 2, 8 der Antriebswelle 1 und Abtriebswelle 7 aufweist. Die Lagersitze können beispielsweise in Gehäusedeckel integriert sein.

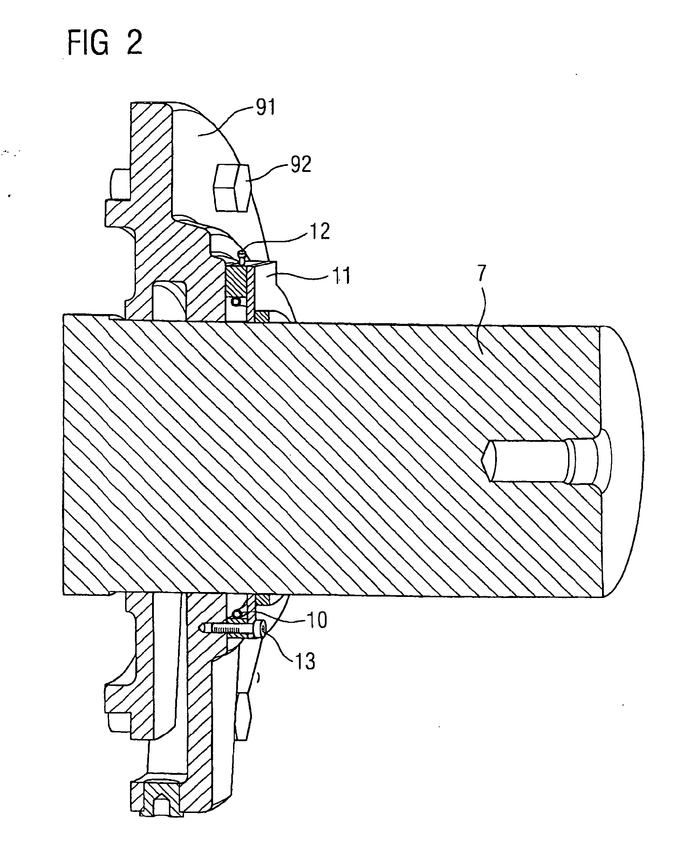

Entsprechend Figur 2 ist die Abtriebswelle 7 radial von einem Flansch 11 umgeben, der beispielsweise mittels einer Schraube 13 an einem das Getriebegehäuse 9 verschließenden Gehäusedeckel 91 befestigt ist. Der Gehäusedeckel 91 ist im vorliegenden Ausführungsbeispiel mittels einer Schraube 91 am Getriebegehäuse 9 montiert. Grundsätzlich könnte der Flansch 11 auch einstückig an den Gehäusedeckel 91 angeformt oder in beliebiger Weise form- oder stoffschlüssig mit dem Gehäusedeckel 91 verbunden sein.

An einer der Abtriebswelle 7 zugewandten inneren Mantelseite des Flansches 11 ist eine umlaufende Nut vorgesehen, in der ein ringförmiges, schlauchartiges Dichtungselement 10 aus einem elastischen Material fixiert ist. In einem Zustand mit reduziertem Innendruck umgibt das Dichtungselement 10 die Abtriebswelle 7 berührungsfrei.

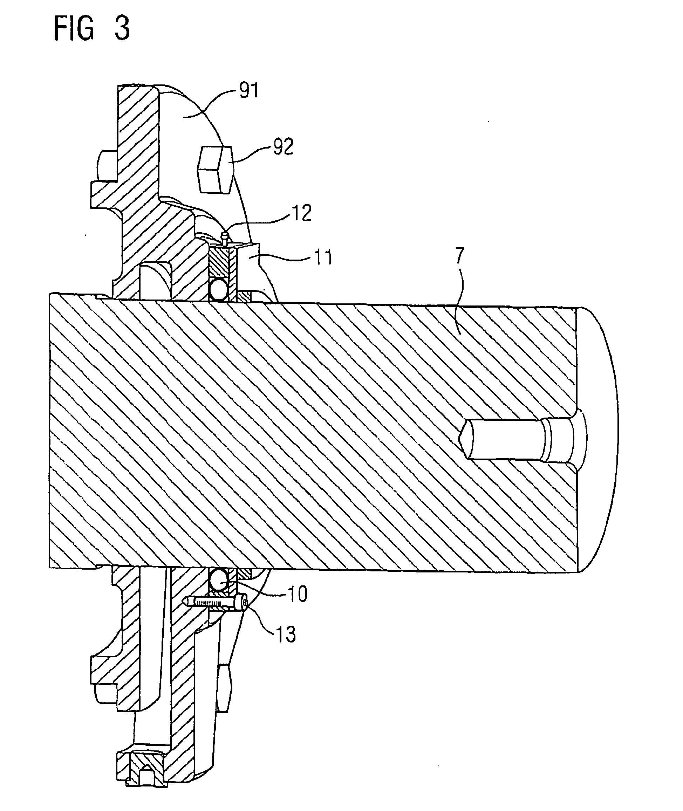

Das Dichtungselement 10 kann durch eine Innendruckerhöhung expandierbar werden. In diesem Zustand ist das Dichtungselement 10 in Figur 3 dargestellt. Ein sich radial zwischen umlaufender Nut und Abtriebswel'-e 7 erstreckender Zwischenraum ist im expandierten Zustand vollständig durch das Dichtungselement 10 abgedichtet, wobei das Dichtungselement 10 zum permanenten Verbleib im Getriebe nach dessen Transport oder Inbetriebnahme ausgestaltet ist. Entsprechend einer bevorzugten Ausführungsform ist das Dichtungselement 10 mit einer den Innendruck steuernden oder regelnden Transportsicherungsvorrichtung gekoppelt.

Vorzugsweise wird das Dichtungselement 10 als elastischer ringförmiger Schlauch in die Nut eingelegt. Durch seine Steifigkeit liegt der Schlauch außen in der Nut an und hat bei reduziertem Innendruck keine Berührung zur Abtriebswelle 7. Der Schlauch besteht vorteilhafterweise aus einem Material, das durch Erhöhung des Innendrucks gegenüber einem Außendruck sein Volumen vergrößert und sich nur elastisch verformt. Der Schlauch ist mit einer Öffnung versehen, beispielsweise einem Ventil 12. Auf diese Weise kann der Innendruck des Schlauchs von außen erhöht werden kann. Mit der Erhöhung des Innendrucks vergrößert sich das Volumen des Schlauches so weit, daß er an der Abtriebswelle 7 und an einer inneren Mantelseite der Nut anliegt. Abhängig von Innendruck im Schlauch und geometrischer Gestaltung der Nut kann der Schlauch auch an flankierenden Stirnflächen anliegen, um weitere Dichtflächen zwischen schlauch und Stirnflächen zu realisieren. Beispielsweise kann eine umlaufende Nut auch an einer Stirnseite des Flansches 11 vorgesehen sein, wobei das Dichtungselement 10 einen sich axial zwischen einem Flanschabschnitt der Abtriebswelle 7 und der Nut erstreckenden Zwischenraum abdichten kann. Durch den Einsatz elastischer Werkstoffe für den Schlauch können geringe Relativbewegungen oder Vibrationen zwischen Abtriebswelle 7 und Getriebegehäuse 9 kompensiert werden, ohne daß dies zu einer unerwünscht eingeschränkten Dichtfunktion führt.

Für einen Austausch des Schlauches ist ein Verschlußteil im Bereich der umlaufenden Nut vorgesehen. Nach Entfernung des Verschlußteils ist der Schlauch frei zugänglich. Aufgrund seiner kann der Schlauch zumindest abschnittsweise aus der Nut herausgezogen, getrennt und anschließend entfernt werden. Eine Installation eines neuen Schlauches erfolgt vorzugsweise mit einem geteilten Schlauch, der nach seiner Installation stoffschlüssig gefügt wird.

Die Figuren 2 und 3 beziehen sich exemplarisch auf ein Dichtungselement 10 für die Abtriebswelle 7, jedoch gelten obige Ausführungen in analoger Weise gleichermaßen für ein um die Antriebswelle 1 angeordnetes Dichtungselement.

Die Anwendung der vorliegenden Erfindung ist nicht auf das vorliegende Ausführungsbeispiel beschränkt.

## Patentansprüche

1. Getriebe für eine Windkraftanlage mit
- einer mit einer Rotornabe verbindbaren Antriebswelle (1),
- einer mit einem Generator verbindbaren Abtriebswelle (7),
- einem mit der Antriebswelle (1) drehfest verbundenen ersten Zahnrad (3), das in einem Getriebegehäuse (9) angeordnet ist,
- einem mit der Abtriebswelle (7) drehfest verbundenen zweiten Zahnrad (5), das im Getriebegehäuse (9) angeordnet ist und mit dem ersten Zahnrad (3) kämmt oder mit diesem über ein oder mehrere weitere Zahnräder (6) gekoppelt ist,
- zumindest einem die Antriebswelle (1) und/oder die Abtriebswelle (7) radial umgebenden Flansch (11), der an einer der Antriebswelle (1) oder Abtriebswelle (7) zugewandten Seite eine umlaufende Nut aufweist,
**dadurch gekennzeichnet, daß**
- in der umlaufenden Nut ein ringförmiges, schlauchartiges Dichtungselement (10) aus einem elastischen Material fixiert ist, das durch eine Innendruckerhöhung expandierbar ist, wobei ein Zwischenraum zwischen der Antriebswelle (1) oder Abtriebswelle (7) und der umlaufenden Nut in einem expandierten Zustand vollständig durch das Dichtungselement (10) abgedichtet ist,
- das Dichtungselement (10) mit einer den Innendruck steuernden oder regelnden Transportsicherungsvorrichtung gekoppelt ist.

2. Getriebe nach Anspruch 1,
bei dem das Dichtungselement (10) in einem Zustand mit reduziertem Innendruck die Antriebswelle (1) oder Abtriebswelle (7) berührungsfrei umgibt.

3. Getriebe nach Anspruch 2,
bei dem das Dichtungselement (10) zum permanenten Verbleib im Getriebe nach Transport und/oder Inbetriebnahme des Getriebes ausgestaltet ist.

4. Getriebe nach einem der Ansprüche 1 bis 3,
bei dem der Flansch (11) Teil eines das Getriebegehäuse (6) verschließenden Gehäusedeckels (91) ist.

5. Getriebe nach einem der Ansprüche 1 bis 4,
bei dem sich der Zwischenraum radial zwischen der Antriebswelle (1) oder Abtriebswelle (7) und der umlaufenden Nut erstreckt.

6. Getriebe nach Anspruch 5,
bei dem die umlaufende Nut an einer inneren Mantelseite des Flansches (11) vorgesehen ist

7. Getriebe nach einem der Ansprüche 1 bis 4,
bei dem die umlaufende Nut an einer Stirnseite des Flansches (11) vorgesehen ist, und bei dem die Antriebswelle (1) oder Abtriebswelle (7) einen Flanschabschnitt umfaßt, und bei dem sich der Zwischenraum axial zwischen dem Flanschabschnitt und der umlaufenden Nut erstreckt.

## Claims

1. Gearbox for a wind turbine comprising
- an input shaft (1) which can be connected to a rotor hub,
- an output shaft (7) which can be connected to a generator,
- a first gear wheel (3) rigidly connected to the input shaft (1) and arranged inside a gearbox housing (9),
- a second gear wheel (5), which is arranged in the gearbox housing (9) and meshes with the first gear wheel (3) or is coupled thereto via one or more further gear wheels (6), and is rigidly connected to the output shaft (7),
- at least one flange (11) which radially surrounds the input shaft (1) and the output shaft (7) and has a circumferential groove on a side facing the input shaft (1) or output shaft (7),
- **characterized in that** an annular tubular sealing element (10) made from an elastic material is fixed in the circumferential groove and can be expanded by an increase in the internal pressure, an intermediate space between the input shaft (1) or output shaft (7) and the circumferential groove thus being completely sealed by the sealing element (10) when it is expanded, the sealing element (10) is coupled to a transportation safety device which controls or regulates the internal pressure.

2. Gearbox according to Claim 1, in which the sealing element (10) surrounds without contact the input shaft (1) or output shaft (7) when there is reduced pressure.

3. Gearbox according to Claim 2, in which the sealing element (10) is designed so that it can remain permanently in the gearbox after the gearbox has been transported and put into operation.

4. Gearbox according to one of Claims 1 to 3, in which the flange (11) is part of a housing cover (91) which closes the gearbox housing (9).

5. Gearbox according to one of Claims 1 to 4, in which the intermediate space extends radially between the input shaft (1) or output shaft (7) and the circumferential groove.

6. Gearbox according to Claim 5, in which the circumferential groove is provided on an inner shell side of the flange (11).

7. Gearbox according to one of Claims 1 to 4, in which the circumferential groove is provided on an end side of the flange (11) and in which the input shaft (1) or output shaft (7) surrounds a flange section, and in which the intermediate space extends axially between the flange section and the circumferential groove.

## Revendications

1. Transmission pour une éolienne comprenant
- un arbre ( 1 ) menant pouvant être relié à un moyeu de rotor,
- un arbre ( 7 ) mené pouvant être relié à une génératrice,
- une première roue ( 3 ) dentée solidaire en rotation de l'arbre ( 1 ) menant et montée dans un carter ( 9 ) de transmission,
- une deuxième roue ( 5 ) dentée solidaire en rotation de l'arbre ( 7 ) mené, montée dans le carter ( 9 ) de transmission et engrenant avec la première roue ( 3 ) dentée ou couplée à celle-ci par une ou plusieurs autres roues ( 6 ) dentées,
- au moins une bride ( 11 ) qui entoure radialement l'arbre ( 1 ) menant et/ou l'arbre ( 7 ) mené et qui a une rainure circonférentielle du côté tourné vers l'arbre ( 1 ) menant ou vert l'arbre ( 7 ) mené,
**caractérisée en ce que**
- dans la rainure circonférentielle est immobilisé un élément ( 10 ) d'étanchéité annulaire en forme de gaine en une matière élastique qui peut être expansé par une élévation de la pression intérieure, un espace intermédiaire entre l'arbre ( 1 ) menant ou l'arbre ( 7 ) mené et la rainure périphérique étant à l'état expansé rendu complètement étanche par l'élément ( 10 ) d'étanchéité,
- l'élément ( 10 ) d'étanchéité est couplé à un dispositif de sécurité de transport commandant ou réglant la pression intérieure.

2. Transmission suivant la revendication 1,
dans laquelle l'élément ( 10 ) d'étanchéité entoure sans contact l'arbre ( 1 ) menant ou l'arbre ( 7 ) mené dans un état de pression intérieure réduite.

3. Transmission suivant la revendication 2,
dans laquelle l'élément ( 10 ) d'étanchéité est conformé pour rester en permanence dans la transmission après le transport et/ou la mise en fonctionnement de la transmission.

4. Transmission suivant l'une des revendication 1 à 3,
dans laquelle la bride ( 11 ) fait partie d'un couvercle ( 91 ) de carter fermant le carter ( 6 ) de la transmission.

5. Transmission suivant l'une des revendication 1 à 4,
dans laquelle l'espace intermédiaire s'étend radialement entre l'arbre ( 1 ) menant ou l'arbre ( 7 ) mené et la rainure périphérique.

6. Transmission suivant la revendication 5,
dans laquelle la rainure périphérique est prévue sur un côté latéral intérieur de la bride ( 11 ).

7. Transmission suivant l'une des revendication 1 à 4,
dans laquelle la rainure périphérique est prévue sur un côté frontal de la bride ( 11 ) et dans laquelle l'arbre ( 1 ) menant ou l'arbre ( 7 ) mené comprend une partie de bride et dans laquelle l'espace intermédiaire s'étend axialement entre la partie de bride et la rainure périphérique.
